# EUROPÄISCHE PATENTSCHRIFT

(11) **EP 3 623 116 B1**
(45) Veröffentlichungstag und Bekanntmachung des Hinweises auf die Patenterteilung: **30.10.2024**
(21) Anmeldenummer: 19195660.6
(22) Anmeldetag: 05.09.2019
(51) Int. Cl.: B25J 9/16

(54) **VERFAHREN UND VORRICHTUNG ZUR KOLLISIONSFREIEN BEWEGUNGSPLANUNG EINES MANIPULATORS**
METHOD AND DEVICE FOR COLLISION-FREE MOVEMENT PLANNING OF A MANIPULATOR
PROCÉDÉ ET DISPOSITIF DE PLANIFICATION DU MOUVEMENT SANS COLLISION D'UN MANIPULATEUR

(30) Priorität: 13.09.2018 DE 102018122376
(43) Veröffentlichungstag der Anmeldung: 18.03.2020
(73) Patentinhaber: Pilz GmbH & Co. KG, 73760 Ostfildern (DE)
(72) Erfinder: Graichen, Knut, 73760 Ostfildern (DE); Völz, Andreas, 73760 Ostfildern (DE); Bakovic, Daniel, 73760 Ostfildern (DE)
(74) Vertreter: Witte, Weller & Partner Patentanwälte mbB

(56) Entgegenhaltungen:
- DIMITROV VELIN ET AL: "Hierarchical Navigation Architecture and Robotic Arm Controller for a Sample Return Rover", 2013 IEEE INTERNATIONAL CONFERENCE ON SYSTEMS, MAN, AND CYBERNETICS, IEEE, 13 October 2013 (2013-10-13), pages 4476 - 4481, XP032556947, DOI: 10.1109/SMC.2013.761
- ABRAHAM SÁNCHEZ ET AL: "A Reactive Lazy PRM Approach for Nonholonomic Motion Planning", 1 January 2006, ADVANCES IN ARTIFICIAL INTELLIGENCE - IBERAMIA-SBIA 2006 LECTURE NOTES IN COMPUTER SCIENCE;LECTURE NOTES IN ARTIFICIAL INTELLIG ENCE;LNCS, SPRINGER, BERLIN, DE, PAGE(S) 542 - 551, ISBN: 978-3-540-45462-5, XP019044233
- QUINLAN S ET AL: "Elastic bands: connecting path planning and control", PROCEEDINGS OF THE INTERNATIONAL CONFERENCE ON ROBOTICS AND AUTOMATION ATLANTA, MAY 2 - 6, 1993; [PROCEEDINGS OF THE INTERNATIONAL CONFERENCE ON ROBOTICS AND AUTOMATION], LOS ALAMITOS, IEEE COMP. SOC. PRESS, US, vol. CONF. 10, 2 May 1993 (1993-05-02), pages 802 - 807, XP010095009, ISBN: 978-0-8186-3450-5, DOI: 10.1109/ROBOT.1993.291936
- KUNZ T ET AL: "Real-time path planning for a robot arm in changing environments", INTELLIGENT ROBOTS AND SYSTEMS (IROS), 2010 IEEE/RSJ INTERNATIONAL CONFERENCE ON, IEEE, PISCATAWAY, NJ, USA, 18 October 2010 (2010-10-18), pages 5906 - 5911, XP031920895, ISBN: 978-1-4244-6674-0, DOI: 10.1109/IROS.2010.5653275
- ZUBE ANGELIKA: "Cartesian nonlinear model predictive control of redundant manipulators considering obstacles", 2015 IEEE INTERNATIONAL CONFERENCE ON INDUSTRIAL TECHNOLOGY (ICIT), IEEE, 17 March 2015 (2015-03-17), pages 137 - 142, XP032785466, DOI: 10.1109/ICIT.2015.7125089
- CHONHYON PARK ET AL: "ITOMP: Incremental Trajectory Optimization for Real-Time Replanning in Dynamic Environments", 1 January 2012 (2012-01-01), pages 207 - 215, XP055576235, Retrieved from the Internet <URL:https://www.google.com/url?sa=t&rct=j&q=&esrc=s&source=web&cd=3&ved=2ahUKEwigtd_fhq_hAhXh1uAKHZVEDoIQFjACegQIABAC&url=https%3A%2F%2Fwww.aaai.org%2Focs%2Findex.php%2FICAPS%2FICAPS12%2Fpaper%2Fdownload%2F4705%2F4731&usg=AOvVaw2cBfGuPXRadY3dv75Cwpw0> [retrieved on 20190401], DOI: 10.1109/TRO.2017.2765335
- SUN WEN ET AL: "High-Frequency Replanning Under Uncertainty Using Parallel Sampling-Based Motion Planning", IEEE TRANSACTIONS ON ROBOTICS, IEEE SERVICE CENTER, PISCATAWAY, NJ, US, vol. 31, no. 1, 1 February 2015 (2015-02-01), pages 104 - 116, XP011572141, ISSN: 1552-3098, [retrieved on 20150203], DOI: 10.1109/TRO.2014.2380273
- MICHAEL OTTE ET AL: "RRT X : Asymptotically optimal single-query sampling-based motion planning with quick replanning", INTERNATIONAL JOURNAL OF ROBOTICS RESEARCH., vol. 35, no. 7, 20 September 2015 (2015-09-20), US, pages 797 - 822, XP055658741, ISSN: 0278-3649, DOI: 10.1177/0278364915594679

## Beschreibung

Die vorliegende Erfindung betrifft ein Verfahren zur kollisionsfreien Bewegungsplanung eines Manipulators von einem Startpunkt zu einem Zielpunkt sowie eine entsprechende Vorrichtung mit mindestens einem Manipulator und einer Steuereinheit, welche das Verfahren ausführt.

Kollisionsfreie Bewegungsplanung ist in der Robotik die Aufgabe, einen Bewegungspfad für einen Roboter oder einen Manipulator von einem Startpunkt zu einem Endpunkt aufzufinden, ohne dass es während der Bewegung zu einer Kollision mit einem Hindernis oder mit sich selbst kommt. Ein Verfahren zur kollisionsfreien Bewegungsplanung ist beispielsweise aus der DE 10 2010 007 458 A1 bekannt.

DE 10 2010 007 458 A1 zeigt eine kollisionsfreie Bewegungsplanung für einen Industrieroboter mit einem einzelnen Roboterarm (Manipulator), wie er beispielsweise in Fertigungsanlagen eingesetzt wird. Industrieroboter sind Arbeitsmaschinen zur Handhabung, Montage oder Bearbeitung von Werkstücken. Üblicherweise umfasst ein Industrieroboter mindestens einen Manipulator mit mehreren Bewegungsachsen und einer programmierbaren Steuerung, die während des Betriebs die Bewegungsabläufe des Roboters koordiniert, indem sie die Antriebe des Roboters entsprechend ansteuert.

Der menschennahe Robotereinsatz erfordert Bewegungsplanungsmethoden, die in der Lage sind, kollisionsfreie Bewegungen mit minimaler Verzögerung zu berechnen. Insbesondere müssen die Planungsmethoden geeignet sein, sich an eine ständig ändernde Umgebung anzupassen, um auch bewegten Hindernissen Rechnung zu tragen. Letzteres erfordert eine Neuplanung oder Adaption der Planung während der Bewegung des Roboters.

Eine kontinuierliche Neuplanung bei der Bewegungsplanung eines Roboters ist mit bekannten globalen Pfadplanungsmethoden, beispielsweise basierend auf dynamischen Roadmaps (DRM), dann schwierig, wenn die Dynamik des Roboters nicht oder nicht ausreichend berücksichtigt werden kann. So führen bekannte globale Planer üblicherweise die Pfadplanung zunächst ohne Berücksichtigung der Roboterdynamik durch und berücksichtigen die Roboterdynamik erst bei einer anschließenden Zeitparametrierung eines aufgefundenen Pfads. Die Ausführung des zeitparametrierten Pfads wird dann auf potenzielle Kollision mit bewegten Hindernissen überwacht und der Roboter bei einer potenziellen Kollision sicher angehalten. Aus der sicheren Position heraus erfolgt eine Neuplanung, so dass der Roboter seinen Weg an die neuen Bedingungen angepasst fortsetzen kann. Bewegte Hindernisse in der Umgebung führen so zu häufigen Anhalten und damit verbunden zu langsamen und unnatürlichen Bewegungen des Roboters.

Eine Möglichkeit, die Dynamik des Roboters effektiver zu berücksichtigen, ist kinodynamische Bewegungsplanung, wie sie beispielhaft in "RRTx: Real-time Motion Plannung/Replanning for Environments with unpredictable obstacles" (Michael Otte) beschrieben ist. Die kinodynamische Bewegungsplanung basiert jedoch auf probabilistischen Verfahren, die den Nachteil haben, dass sie keine deterministischen Trajektorien erzeugen und die benötigte Rechenzeit bei solchen Verfahren zwar begrenzt werden kann, aber im Allgemeinen nicht vorhersehbar ist. Deterministische Verfahren hingegen, wie bspw. DRM-basierte Verfahren, sind für eine kinodynamische Bewegungsplanung nicht geeignet.

Darüber hinaus sind als Alternative für sich verändernde Umgebungen lokale reaktive Methoden, wie z.B. artificial potential fields, bekannt. Diese generieren anstatt von kompletten Trajektorien Steuerimpulse zur Bewegung des Roboters. Die Steuerimpulse "drängen" den Roboter weg von Hindernissen, vorzugsweise in Richtung eines definierten Ziels. Bei diesen Methoden wird somit nicht zwischen Planung und Steuerung getrennt, sondern unmittelbar auf Hindernisse reagiert. Dies ermöglicht es, besonders schnell auf sich bewegende Hindernisse reagieren zu können. Problematisch ist jedoch, dass diese auf lokaler Optimierung basierenden Ansätze in lokalen Minima stecken bleiben können und sie daher bei hochdimensionalen Robotern in komplexen Umgebungen nur eingeschränkt einsetzbar sind.

ABRAHAM SÄNCHEZ ET AL, A Reactive Lazy PRM Approach for Nonholonomic Motion Planning, ADVANCES IN ARTIFICIAL INTELLIGENCE - IBERAMIA-SBIA 2006 LECTURE NOTES IN COMPUTER SCIENCE;LECTURE NOTES IN ARTIFICIAL INTELLIG ENCE;LNCS, SPRINGER, BERLIN, DE, PAGE(S) 542 - 551, (20060101), ISBN 978-3-540-45462-5, beschreiben die Kombination eines PRM Planungsansatzes mit einem reaktiven Planer.

QUINLAN S ET AL, "Elastic bands: connecting path planning and control", PROCEEDINGS OF THE INTERNATIONAL CONFERENCE ON ROBOTICS AND AUTOMATION ATLANTA, MAY 2 - 6, 1993; [PROCEEDINGS OF THE INTERNATIONAL CONFERENCE ON ROBOTICS AND AUTOMATION], LOS ALAMITOS, IEEE COMP. SOC. PRESS, US, (19930502), vol. CONF. 10, doi:10.1109/ROBOT.1993.291936, ISBN 978-0-8186-3450-5, beschreiben ebenfalls Ansätze lokale (reaktive) Planung und globale Planung zu kombinieren.

DIMITROV V ET AL. "Hierarchical Navigation Architecture and Robotic Arm Controller for a Sample Return Rover", 2013 IEEE INTERNATIONAL CONFERENCE ON SYSTEMS, MAN, AND CYBERNETICS beschreiben ein Navigationssystem für einen Rover basierend auf lokaler und globaler Planung sowie einen Kontroller zur Steuerung eines Manipulators (Roboterarm) des Rovers.

Es ist daher eine Aufgabe der vorliegenden Erfindung, eine optimierte Bewegungsplanung für einen Roboter in einer sich verändernden Umgebung anzugeben, welche die vorstehenden Nachteile vermeidet. Insbesondere ist es eine Aufgabe, eine Bewegungsplanung anzugeben, welche die Dynamik eines Roboters berücksichtigt und eine kontinuierliche Neuplanung ohne Anhalten oder Geschwindigkeitsreduktion ermöglicht.

Gemäß einem Aspekt der vorliegenden Erfindung wird diese Aufgabe gelöst durch ein Verfahren zur kollisionsfreien Bewegungsplanung eines ersten Manipulators eines Roboters von einem Startpunkt zu einem Zielpunkt, mit den Schritten:
- Bestimmen eines Sollpfads des ersten Manipulators zu dem Zielpunkt mit einem globalen Planer;
- kontinuierliches Bestimmen einer Bewegung des ersten Manipulators mit einem lokalen Planer basierend auf dem Sollpfad des globalen Planers;
- Ausführen der Bewegung durch den ersten Manipulator parallel zur Bestimmung durch den globalen und lokalen Planer,
wobei der globale Planer mindestens einmal eine Neuplanung vornimmt und der lokale Planer basierend auf dem neugeplanten Sollpfad die Bewegung des ersten Manipulators bestimmt.

Es ist somit eine Idee der vorliegenden Erfindung, bei der Bewegungsplanung eines Manipulators eines Roboters eine wiederholte globale Planung mit einer kontinuierlichen lokalen Planung zu verbinden. Kontinuierlich bedeutet in diesem Zusammenhang, dass fortlaufend eine Neuplanung stattfindet, vorzugsweise in einem definierten Intervall. Wiederholt hingegen bedeutet, dass der globale Planer mindestens einmal eine Neuplanung vornimmt. Dabei wird die wiederholte Bestimmung des Sollpfads insbesondere unmotiviert veranlasst, d.h. eine erneute Bestimmung des Sollpfads wird zunächst unabhängig davon ausgeführt, ob der aktuelle Sollpfad noch valide bzw. noch ausführbar ist. Im Gegensatz zu bekannten Verfahren wird somit bewusst eine Neuplanung auch dann vorgenommen, wenn sich die Umgebung für den lokalen Planer offensichtlich nicht verändert hat. Eine Neuplanung durch den globalen Planer muss somit nicht von einem lokalen Planer "getriggert" sein. Auf diese Weise kann die globale Planung einen kürzeren Sollpfad finden, wenn bspw. ein Hindernis aus dem zuvor geplanten Sollpfad verschwindet.

Erfindungsgemäß sind somit zwei unterschiedliche Planer vorgesehen, lokal und global, die parallel ausgeführt werden, sich ergänzen und sich insbesondere gegenseitig bei der jeweiligen Planung berücksichtigen. Parallel bedeutet in diesem Zusammenhang zeitlich parallel, d.h. die Planer werden rechentechnisch parallel, bspw. in Threads, abgearbeitet.

Der globale Planer erzeugt einen global geplanten Pfad und der lokale Planer, welcher schnelle Steueraktionen generieren kann, vermeidet unter Berücksichtigung des global geplanten Pfades Kollisionen mit Hindernissen. Der Manipulator des Roboters wird somit entlang des global geplanten Pfades geführt und gleichzeitig von Hindernissen "wegdrängt". Beide Planer, global und lokal, werden dabei mehrfach in einer Schleife ausgeführt und machen vorzugsweise gegenseitig Gebrauch von ihren jeweiligen Ergebnissen.

Die Kombination beider Planer hat den Vorteil, dass einerseits das Problem lokaler Minima vermieden werden kann, da der lokale Planer vom globalen Planer "geführt" wird, und andererseits die globale Planung "dynamischer" wird, da der lokale Planer den Sollpfad lokal optimiert. Insbesondere kann die globale Planung weiterhin im wesentlichen eine rein kinematische Planung sein und die sonst übliche Pfadglättung und Zeitparametrierung wird durch eine Pfadfolgereglung mittels des lokalen Planers ersetzt.

Durch die kontinuierliche Planung mit dem lokalen Planer und der ergänzenden Neuplanung mit dem globalen Planer kann die Bewegungsplanung optimal auf eine sich verändernde und komplexe Umgebung angepasst werden, da die Nachteile eines Verfahrens durch die Vorteile des anderen ausgeglichen werden. Insbesondere kann eine Dynamik des Roboters bei der Planung ausreichend berücksichtigt werden, wodurch eine Neuplanung ohne Anhalten und Geschwindigkeitsreduktion des Roboters sowie eine nahtlose Adaption der Bewegung bei veränderter Umgebung möglich ist. Hierdurch kann ein vorausschauendes Umfahren von bewegten Hindernissen und die Verwendung kürzerer Pfade, falls Hindernisse wegfallen, erreicht werden. Die eingangs genannte Aufgabe ist damit vollständig gelöst.

In einer bevorzugten Ausgestaltung bestimmt der globale Planer kontinuierlich den aktuellen Sollpfad. Indem der globale Planer nicht nur wiederholt, sondern kontinuierlich plant, kann eine komplexe dynamische Umgebung zuverlässig berücksichtigt werden, da stetig ein neuer Sollpfad ermittelt wird. Auch bei der kontinuierlichen Bestimmung führt der Planer eine Neuplanung vorzugweise zunächst unmotiviert aus, d.h. unabhängig von der Validität des aktuellen Sollpfads.

In einer weiteren Ausgestaltung ist der globale Planer ein deterministischer Planer, insbesondere basierend auf einer dynamischen Roadmap (DRM). Deterministische Planer haben den Vorteil, dass sie gegenüber probabilistischen Verfahren eine deterministische Trajektorie liefern, d.h., eine eindeutige und reproduzierbare Lösung innerhalb eines definierten Zeitraums. Bei probabilistischen Verfahren ist die benötigte Rechenzeit im Allgemeinen auch begrenzbar, aber regelmäßig nicht vorhersehbar. Da bei der Kombination des globalen Planers mit einem lokalen Planer keine Anforderungen an die Art des globalen Planers gestellt werden, kann durch die Verwendung eines deterministischen Planers vorteilhaft eine schnelle deterministische Neuplanung von kollisionsfreien Bewegungen in dynamisch veränderlichen Umgebungen erfolgen. Besonders bevorzugt erfolgt das Bestimmen des Sollpfades durch den globalen Planer basierend auf einer dynamischen Roadmap (DRM). Die globale Planung mit einem DRM-basierten Planer ist besonders vorteilhaft, da dieser eine schnelle und zur Laufzeit deterministische globale Pfadplanung ermöglicht.

In einer weiteren Ausgestaltung erfragt der globale Planer bei einer Neuplanung ein Ergebnis des lokalen Planers und berücksichtigt dieses bei der Bestimmung des Sollpfads. Der globale Planer kann somit in jedem Intervall Ergebnisse der parallelen lokalen Planung berücksichtigen. Insbesondere kann der globale Planer einen prognostizierten, aktuellen Startzustand vom lokalen Planer erfragen und bei der Neuplanung als neuen Startzustand berücksichtigen. Eine Neuplanung muss so nicht, wie im Allgemeinen üblich, von einer Ruhestellung ausgehen. Mit anderen Worten die Dynamik des Roboters wird berücksichtigt, so dass der Roboter nicht erst anhalten muss, um eine Neuplanung durchzuführen. Die Ausgestaltung trägt somit zu einer gleichmäßigeren und natürlicheren Bewegung des Roboters bei.

In einer weiteren Ausgestaltung basiert der lokale Planer auf modellprädiktiver Regelung (MPC) und das Bestimmen der Bewegung erfolgt optimierungsbasiert durch Lösen eines dynamischen Optimierungsproblems. Optimierungsbasierte Verfahren sind für die Bewegungsplanung besonders geeignet, um Pfade zu finden, die eine gleichmäßige und natürliche Bewegung eines Roboters oder seines Manipulators ermöglichen. Die Pfade sind deterministisch und somit reproduzierbar und in endlicher Rechenzeit bestimmbar. Gleichzeitig kann ein auf modellprädiktiver Regelung beruhender Planer eine Vielzahl veränderlicher Parameter und damit insbesondere die Dynamik des Roboters umfassend berücksichtigen.

In einer bevorzugten Ausgestaltung umfasst das dynamische Optimierungsproblem ein Kostenfunktional, welches eine Abweichung des Manipulators vom Sollpfad sowie eine Abweichung eines aktuellen Pfadparameters von einem durch den Sollpfad vorgegebenen Zielparameter gewichtet. Indem das dynamische Optimierungsproblem Abweichungen von einem Sollpfad und einem aktuellen Pfadparameter bei der Planung berücksichtigt, wird der lokale Planer in vorteilhafter Weise mit dem globalen Planer verknüpft. Der Sollpfad ist somit integraler Bestandteil des dynamischen Optimierungsproblems und der globale Planer "führt" den in der Regel mit kürzeren Zykluszeiten arbeitenden lokalen Planer.

In einer weiteren Ausgestaltung umfasst das dynamische Optimierungsproblem ferner eine Pfaddynamik sowie Pfadeingangsbeschränkungen, wobei die Pfaddynamik insbesondere auf dem Sollpfad des globalen Planers basiert. Indem der lokale Planer zusätzlich eine Pfaddynamik, insbesondere eine Pfaddynamik des Sollpfads, berücksichtigt, kann die natürliche Bewegung des Roboters weiter verbessert werden.

In einer weiteren Ausgestaltung umfasst das dynamische Optimierungsproblem ferner mindestens eine Ungleichungsbeschränkung für einen Abstand zu Kollisionen. Durch zusätzliche Ungleichungsbeschränkungen kann ein Mindestabstand zu Hindernissen definiert werden, welcher beim Lösen des Optimierungsproblems zu berücksichtigen ist. Auf diese Weise kann eine Kollision mit Hindernissen vermieden werden. Gleichzeitig muss sich der Manipulator nicht kategorisch an den vorgegebenen Sollpfad halten, sondern kann situationsbedingt von diesem abweichen, bspw. um schneller ans Ziel zu gelangen. Die Bewegung des Roboters wird dadurch in Bezug zu der sich verändernden Umgebung natürlicher.

In einer weiteren Ausgestaltung ist das Ausführen der Bestimmung durch den globalen Planer über eine definierte Bedingung einstellbar. Die Ausführung des globalen Planers kann somit an Bedingungen geknüpft sein, wodurch die Planung auf Besonderheiten und Sonderfälle bei der globalen Planung, vorzugsweise automatisiert, reagieren kann. Auf diese Weise kann eine robustere Bewegungsplanung erreicht werden.

Besonders bevorzugt ist über die definierte Bedingung eine unbedingte, keine oder eine bedingte Ausführung der Bestimmung durch den globalen Planer einstellbar. Die Abstufung in unbedingte, keine oder bedingte Ausführung hat sich als vorteilhaft herausgestellt, da mit diesen, vorzugsweise dynamisch, auswählbaren Einstellungen auf die wesentlichen Sonderfälle, die bei der globalen Planung auftreten können, angemessen reagiert werden kann.

Ferner bevorzugt ist die bedingte Ausführung davon abhängig, ob ein ermittelter Sollpfad und/oder eine ermittelte Bewegung in einem definierten Planungshorizont valide ist und davon, ob ein Abstand zwischen einem aktuellen Zustand und einem Zielzustand während eines letzten Abtastschritts verringert wurde. Das Auffinden keines validen Pfads bzw. kein Fortschreiten bei der Planung sind spezielle Sonderfälle, die durch die bedingte Ausführung berücksichtigt werden können. Die Bewegungsplanung wird hierdurch robuster.

In einer weiteren Ausgestaltung wird das Bewegen des ersten Manipulators pausiert, wenn eine Planung durch den globalen Planer fehlschlägt. Alternativ wird das Bewegen des ersten Manipulators ausschließlich basierend auf dem lokalen Planer fortgesetzt, wenn eine Planung durch den globalen Planer fehlschlägt. Das Pausieren oder das Fortsetzen der Planung ausschließlich über den lokalen Planer sind zwei alternative Vorgehensweisen, die bei der erfindungsgemäßen Kombination zweier Planer als Reaktion auf Sonderfälle des globalen Planers angewandt werden können. Die Robustheit der Bewegungsplanung lässt sich so weiter erhöhen.

In einer weiteren Ausgestaltung prädiziert der globale und/oder der lokale Planer teilweise eine Bewegung eines Hindernisses und/oder der globale und/oder der lokale Planer vergrößert eine Repräsentation eines Hindernisses künstlich. Durch das künstliche Vergrößern von Hindernissen oder das Vorhersagen einer Bewegung von Hindernissen sind die Planer angehalten, vorzeitig eine Umplanung vorzunehmen, um Kollisionen zu vermeiden. Auf diese Weise kann insbesondere eine Fehlertoleranz erhöht werden, um beispielsweise Unsicherheiten bei der Schätzung angemessen zu berücksichtigen.

In einer weiteren Ausgestaltung umfasst das Verfahren ferner eine weitere Bewegungsplanung für mindestens einen zweiten Manipulator und die weitere Bewegungsplanung erfolgt parallel und koordiniert zu der kollisionsfreien Bewegungsplanung des ersten Manipulators. Mit dem Verfahren kann für mehrere Manipulatoren, beispielsweise an einem Zwei-Arm-Roboter, einfach eine Bewegungsplanung durchgeführt werden. Beispielsweise kann der globale Planer für jeden Manipulator eine eigene DRM aufweisen, um einen Sollpfad für beide Manipulatoren koordiniert zu bestimmen. Der lokale Planer arbeitet anschließend auf dem koordinierten Sollpfad, um die Bewegung auszuführen. Da hierfür grundsätzlich auf dieselben Algorithmen zurückgegriffen werden kann, lässt sich eine Bewegung mehrerer Manipulatoren einfach implementieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Ausführungsbeispiels der neuen Vorrichtung,
- Fig. 2: eine schematische Darstellung eines Ausführungsbeispiels des neuen Verfahrens,
- Fig. 3: ein bevorzugtes Ausführungsbeispiel des neuen Verfahrens,
- Fig. 4: eine formale Repräsentation eines Optimierungsproblems eines lokalen Planers, und
- Fig. 5: eine exemplarische Bewegungsplanung gemäß einer Ausführungsform des neuen Verfahrens bei einem bewegten Hindernis.

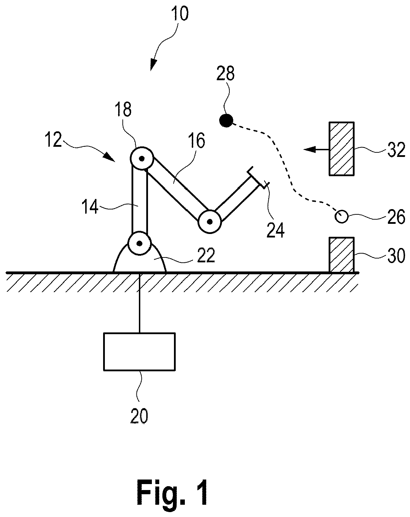

In der Fig. 1 ist ein Ausführungsbeispiel der neuen Vorrichtung in seiner Gesamtheit mit der Bezugsziffer 10 bezeichnet.

Die Vorrichtung 10 ist hier ein Industrieroboter 12. Industrieroboter sind universelle, programmierbare Maschinen zur Handhabung, Montage oder Bearbeitung von Werkstücken mit wenigstens einem Manipulator 14, der die physikalische Interaktion mit der Umgebung ermöglicht und die mechanische Arbeit des Roboters verrichtet. Der Manipulator 14 kann Achsen 16 mit Antriebseinheiten, wie Motoren, Getriebe, Winkelgeber (hier nicht dargestellt) und Gelenke 18 für die mechanische Kopplung der Achsen 16 umfassen. Angesteuert werden die Antriebseinheiten von einer Steuereinheit 20, die als programmierbare Recheneinheit ausgebildet sein kann und die Bewegung des Roboters und des Manipulators koordiniert.

Im Ausführungsbeispiel gemäß Fig. 1 ist der Roboter 12 ein feststehender Roboter mit einer Basis 22, auf der ein Manipulator 14 beweglich gelagert ist. Der Manipulator 14 umfasst hier exemplarisch drei Achsen 16 und drei Gelenke 18. Am Ende des Manipulators 14 ist ein Endeffektor 24 angeordnet, der hier exemplarisch als Greifer dargestellt ist. Die Steuereinheit 20 koordiniert die Bewegung des Roboters 12 und des Manipulators 14 und kann in den Roboter 12 integriert sein oder als eine externe Einrichtung mit diesem verbunden sein.

Es versteht sich, dass ein feststehender Roboter nur eine mögliche Ausgestaltung eines Roboters darstellt, auf den das erfindungsgemäße Verfahren Anwendung findet. Alternativ sind bewegliche Roboter, Roboter mit mehreren Manipulatoren oder Roboter mit einer modularen in eine Vielzahl von Komponenten aufgeteilten Steuereinheit denkbar. Ebenso ist das Verfahren nicht auf industrielle Roboter beschränkt, sondern kann auch bei anderen automatisiert arbeitenden Maschinen Anwendung finden.

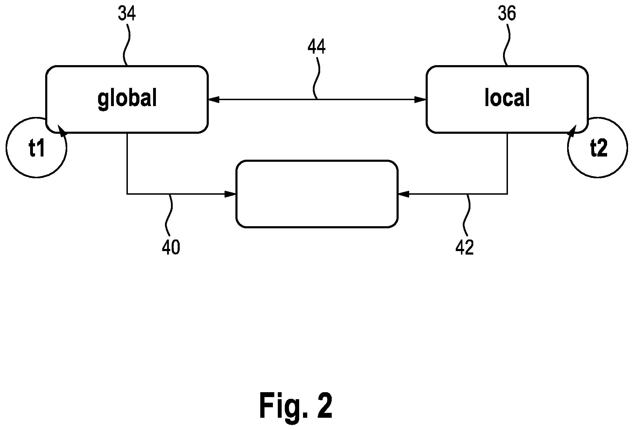

Das Steuern des Roboters umfasst neben der Steuerung der Antriebe auch die kollisionsfreie Bewegungsplanung, d.h. die Suche nach einem Bewegungspfad für den Roboter oder seinen Manipulator von einem Startpunkt 26 zu einem Endpunkt 28, ohne dabei mit sich selbst oder einem Hindernis zu kollidieren. Hindernisse können statische 30 oder sich bewegende Hindernisse 32 sein. Letztere führen dazu, dass die Bewegungsplanung nicht nur einmalig durchgeführt werden muss, sondern mehrfach, falls ein ursprünglich geplanter Pfad durch ein Hindernis 32 ungültig geworden sein sollte. Die kollisionsfreie Bewegungsplanung für den Manipulator des Roboters in dynamischen Umgebungen ist Gegenstand des erfindungsgemäßen Verfahrens, welches im Folgenden anhand der Fig. 2 näher erläutert wird.

Fig. 2 zeigt in einer schematischen Darstellung ein Verfahren gemäß einem Ausführungsbeispiel der vorliegenden Erfindung.

Das Verfahren umfasst drei Prozesse, die vorzugsweise parallel ausgeführt werden können. Der erste Prozess und der zweite Prozess sind Planungsprozesse. Der dritte Prozess umfasst die eigentliche Steuerung des Roboters. Parallel heißt in diesem Zusammenhang, dass die Prozesse rechentechnisch parallelisiert ausgeführt werden, bspw. in synchronen oder asynchronen Threads.

Der erste Prozess ist eine wiederholte Bewegungsplanung mit einem globalen Planer 34 und der zweite Prozess ist eine kontinuierliche Bewegungsplanung mit einem lokalen Planer 36. Der dritte Prozess führt durch Ansteuern der Antriebe des Roboters die vom ersten und zweiten Planer 34, 36 generierte Planung aus.

Ein globaler Planer 34 im Sinne der vorliegenden Erfindung ist ein Planer, der einen Sollpfad von einem definierten Startpunkt zu einem definierten Ausgangspunkt bestimmt. Ausreichend ist hierfür eine kinematische Bahnplanung. Mit anderen Worten muss der globale Planer keine Pfadglättung oder Zeitparametrierung vornehmen, um eine tatsächliche Trajektorie für die Bewegung zu bestimmen, da dies durch eine Pfadfolgeregelung mittels des lokalen Planers 36 erreicht wird.

Das Ergebnis eines jeden Durchlaufs des globalen Planers ist, sofern ein Ergebnis gefunden werden kann, eine kinematische Bahnplanung, d.h. ein möglicher Sollpfad zum Zielpunkt. In einem bevorzugten Ausführungsbeispiel können dabei der Startpunkt bzw. ein Startzustand in jedem Durchlauf basierend auf den Ergebnissen des lokalen Planers 36 variieren.

Ein lokaler Planer 36 im Sinne der vorliegenden Erfindung ist ein Planer, der reaktiv arbeitet, d.h. anstelle eines gesamten Pfades erzeugt der lokale Planer 36 unmittelbar Steuerimpulse als Reaktion auf seine Umwelt. Durch den lokalen Planer 36 werden somit Bewegungen initiiert, die den Roboter von Hindernissen "abstoßen" können, um Kollisionen zu vermeiden, wobei die Bewegung insgesamt vorzugsweise in Richtung eines Zielpunkts "getrieben" wird. Das Verfahren kann eine Prädiktion der Dynamik über einen Horizont beinhalten sowie die Berücksichtigung von Beschränkungen ermöglichen.

Die erfindungsgemäße Kombination sieht vor, dass beide Planer Einfluss auf den dritten Prozess, also die Ansteuerung der Antriebe nehmen. Vorzugsweise werden der globale und der lokale Planer 34, 36 somit nicht unabhängig voneinander ausgeführt, sondern in gegenseitigem Austausch. Der lokale Planer 36 kann auf den Ergebnissen 40 des globalen Planers 34 aufbauen und der globale Planer 34 kann die Ergebnisse 42 des lokalen Planers 36 bei der Neuplanung berücksichtigen. Der Austausch ist hier durch den Pfeil 44 angedeutet und durch die Implementierung der jeweiligen Planer 34, 36 realisiert. Der Austausch 44 ist somit vorzugsweise integraler Bestandteil des jeweiligen Planers.

Der globale Planer 34 plant wiederholt, d.h. er führt mindestens eine Neuplanung während der Bewegung durch. Der lokale Planer 36 plant stets kontinuierlich, d.h. die Planung geht fortlaufend, insbesondere in einem festen Zyklus T₂, vonstatten. In einem bevorzugten Ausführungsbeispiel findet auch die globale Planung kontinuierlich statt, vorzugsweise ebenfalls in einem festen Zyklus T₁. Der Zyklus T₁ kann dabei um ein Vielfaches größer sein als der Zyklus T₂, beispielsweise um den Faktor 10 bis 30, insbesondere 20, und hängt im Wesentlichen von den "worst-case"-Rechenzeiten der einzelnen Schritte ab.

Eine Neuplanung durch den globalen Planer 34 findet insbesondere unmotiviert statt, d.h. der globale Planer 34 führt mindestens eine Neuplanung durch, die nicht von extern getriggert worden ist. Mit anderen Worten ist die globale Neuplanung zunächst unabhängig davon, ob eine alte Lösung noch zulässig ist oder nicht.

Grundsätzlich ist das erfindungsgemäße Verfahren nicht auf eine bestimmte Implementierung der jeweiligen Planer beschränkt. Andere globale Planer, die wiederholt einen Sollpfad generieren können, oder andere lokale Planer, die den Sollpfad eines globalen Planers als Führungsgröße nutzen können, sind denkbar, um im Sinne der vorliegenden Erfindung kombiniert zu werden.

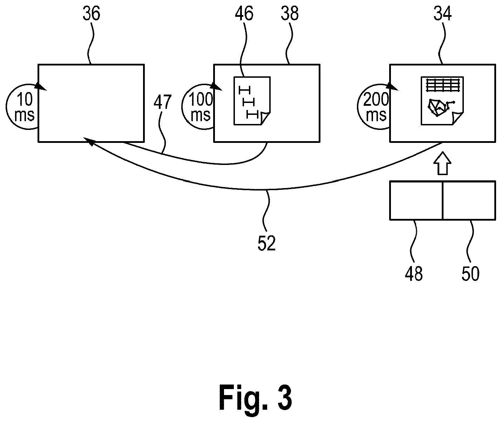

In Bezug auf die Fig. 3 wird im Folgenden ein bevorzugter globaler Planer und ein bevorzugter lokaler Planer und deren Kombination näher erläutert. Gleiche Bezugszeichen bezeichnen hier die gleichen Teile wie zuvor.

Das Verfahren beinhaltet die Planung mit einem globalen Planer 34 und mit einem lokalen Planer 36. Ergänzt werden die Planer 34, 36 in diesem Ausführungsbeispiel durch einen Modellierer 38, der ein Umgebungsmodell 46 beinhaltet und eine Distanzkarte 47 für den lokalen Planer 36 bereitstellen kann.

Die globale Bewegungsplanung des globalen Planers 34 basiert im Ausführungsbeispiel gemäß Fig. 3 auf einer dynamischen Roadmap (DRM). Dynamische Roadmaps sind ein Planungsansatz für sich verändernde Umgebungen, in denen eine häufige Neuplanung erforderlich ist. Eine DRM umfasst einen Graphen G = (V, E) in einem Konfigurationsraum C des Roboters sowie Abbildungsvorschriften. Die Abbildungsvorschriften bilden den gerasterten Arbeitsbereich W auf Knoten V und Kanten E im Graphen G ab. Sie werden in der Planungsphase verwendet, um für bestimmte Hindernisse schnell gültige Teile des Graphen zu ermitteln.

Der DRM-basierte Planungsansatz umfasst grundsätzlich zwei Phasen: Vorlaufphase und Planungsphase.

In einer Vorlaufphase wird zunächst jedem der n-Knoten eine zufällige Konfiguration q(u) zugeordnet, wobei u ∈ V. Die Konfiguration wird hierbei nur auf Selbstkollision geprüft, da in dieser Phase von einer leeren Umgebung ausgegangen wird. Anschließend werden die kₙₙ nächsten Nachbarn v ∈ V jedes Knotens mit Hilfe einer Abstandsmetrik d(u, v) = d(q(u), q(v))) ermittelt, um die Kanten (u, v) ∈ E des Graphen zu erzeugen. Die Wahl der Abstandsmetrik ist dabei ein wichtiger Einflussfaktor auf die Qualität der Roadmap.

Die Abbildung φᵥ: W → V und φₑ: W → E geben für jedes Voxel w ∈ W an, welche Knoten und Kanten des Graphen G ungültig sind, wenn das Voxel durch ein Hindernis belegt ist. Alle Konfigurationen und Bewegungen, die den Knoten und Kanten im Graph entsprechen, werden gerastert, um die inversen Abbildungsvorschriften φₑ⁻⁻¹ : V → W und φᵥ⁻⁻¹: E → W zu erzeugen. Mit den inversen Abbildungsvorschriften kann eine Abbildung der DRM einfach vonstattengehen.

In der Planungsphase wird die DRM verwendet, um einen gültigen Pfad zwischen einer Start-Konfiguration qs und einer Ziel-Konfiguration q_{G} zu finden. Zunächst werden Start und Ziel mit ihren kₙₙ nächsten Nachbarn im Graphen verbunden. Dies ist der einzige Schritt, der eine Kollisionsprüfung während der Planungsphase erfordert. Anschließend werden alle Voxel ermittelt, die sich mit Hindernissen schneiden, und die Abbildungsvorschriften φᵥ und φₑ werden verwendet, um alle Ecken und Kanten des Graphen, die zur Kollision führen, als ungültig zu erklären. Darauffolgend wird der kürzeste gültige Weg zwischen Start und Ziel gesucht. Das Ergebnis entspricht einem Sollpfad im Sinne der Erfindung.

Mit DRM-basierten Planern können Planungszeiten unter 100 Millisekunden auf Standard-Hardware erreicht werden. Ferner kann durch eine parallele Implementierung auf GPUs die Größe der Roadmap bis auf eine Million Knoten skaliert werden.

Die Planung mittels DRM erfolgt wiederholt, d.h. ein Sollpfad wird mehrfach zu verschiedenen Zeitpunkten bestimmt. Vorzugsweise erfolgt die globale Planung auch kontinuierlich in einem festen Intervall. In Fig. 3 wird beispielsweise alle 200 Millisekunden eine globale Neuplanung durchgeführt. Der globale Planer 34 arbeitet hier somit in einer kontinuierlichen Schleife und erzeugt einen aktuellen Sollpfad so lange, bis entweder das Ziel erreicht ist oder die Planung abgebrochen werden soll. Letzteres ist dann der Fall, wenn die vorhergesagte Trajektorie innerhalb einer globalen Sampling-Zeit t ∈[0, Δt_{global}] ungültig ist, oder wenn die maximal zulässige Ausführungszeit abgelaufen ist.

In einem bevorzugten Ausführungsbeispiel ist die Ausführung der kontinuierlichen Bestimmung durch den globalen Planer zudem über eine definierte Bedingung einstellbar. Es kann somit über eine oder mehrere Richtlinien die Ausführung des globalen Planers 34 beeinflusst werden. Hierbei wird vorzugsweise zwischen allgemeinen Planungsrichtlinien 48 und Richtlinien für den Fehlerfall 50 unterschieden.

Über die Planungsrichtlinien 48 kann festgelegt werden, wann der globale Planer aufgerufen werden soll, um einen aktuellen Sollpfad zu bestimmen. Eine definierte Bedingung kann eine unbedingte, keine oder eine bedingte Ausführung des globalen Planers vorsehen. Die unbedingte Ausführung führt in jedem Zyklus eine globale Planung durch, während im Fall, wenn die definierte Bedingung keine Ausführung vorsieht, nur die lokale Planung verwendet wird. Im Gegensatz dazu kann bei der bedingten Ausführung aufgrund verschiedener Kriterien bestimmt werden, ob eine Ausführung des Planers stattfinden soll oder nicht. Ein Kriterium kann bspw. sein, ob die vorhergesagte Trajektorie nicht für den gesamten Horizont gültig ist. Ein anderes oder ergänzendes Kriterium kann sein, ob sich der Abstand zwischen dem aktuellen Zustand und dem Zielzustand während des letzten Zyklus verringert hat, d.h. ob der lokale Planer genügend Fortschritte auf dem Weg zum Ziel gemacht hat.

Die Richtlinien für den Fehlerfall 50 können hingegen dann eingreifen, wenn der globale Planer 34 keinen gültigen Pfad findet, weil es entweder keine Lösung gibt oder, weil die dynamischen Roadmaps unvollständig sind. In diesem Fall kann über die Richtlinien für den Fehlerfall 50 das entsprechende Verhalten festgelegt werden. So kann der Roboter beispielsweise in einen Wartezustand übergehen, bei dem der aktuelle Zustand als Sollpfad definiert wird. Alternativ kann der bisherige Sollpfad beibehalten werden.

Der lokale Planer 36 versucht dann entweder die aktuelle Position zu "halten" oder entlang des vormals gültigen Pfads fortzuschreiten. Als weitere Möglichkeit kann auch ein theoretischer, direkter Pfad als neuer Pfad durch die Richtlinie für den Fehlerfall 50 gesetzt werden, so dass der lokale Planer angehalten ist, auf dem direkten Wege, ungeachtet irgendwelcher Hindernisse, zum Ziel zu gelangen. In diesem Fall ist der lokale Planer somit im Wesentlichen auf sich alleine gestellt und unbeeinflusst von einer globalen Planung.

Über die Planungsrichtlinien 48 und die Richtlinien für den Fehlerfall 50 kann die Bewegungsplanung somit flexibel an das jeweilige Szenario angepasst werden, wodurch die Einsatzmöglichkeiten des neuen Verfahrens erhöht werden.

Die Sollpfade, die hier mit dem DRM-basierten Planer ermittelt werden, dienen als Eingang für den lokalen Planer 36, wie hier durch den Pfeil 52 dargestellt ist. Der lokale Planer 36 arbeitet kontinuierlich, beispielsweise, wie hier dargestellt, mit einer Zykluszeit von 10 Millisekunden.

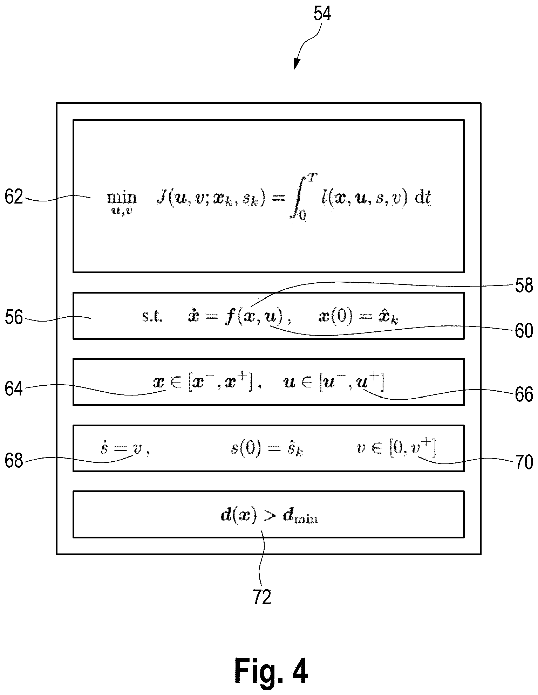

Der lokale Planer 36 basiert in diesem Ausführungsbeispiel auf modellprädiktiver Regelung und wird auch als Model Predictive Controller (MPC) bezeichnet. Die modellprädiktive Reglung ermittelt die tatsächliche Ansteuerung des Manipulators und hat u.a. zur Aufgabe die Kollisionsvermeidung und die Bahnverfolgung. Hierfür wird in jedem Zyklus ein Optimierungsproblem gelöst und der erste Teil der optimalen Lösung als Steuereingang verwendet. Der Sollpfad p(s) mit s ∈ [0, s_{G}], der vom globalen Planer 34 generiert wird, dient als Führung für den lokalen Planer 36, wodurch das Problem der lokalen Minima vermieden werden kann. Ein Optimierungsproblem kann, wie in Fig. 4 dargestellt, formuliert sein.

Fig. 4 zeigt eine formale Repräsentation eines Optimierungsproblems eines bevorzugten lokalen Planers 36.

Das dynamische Optimierungsproblem 54 hat als Ausgangspunkt das Systemmodell, welches die Dynamik 56 des bewegten Systems, d.h. hier des Manipulators 14, mit den Zuständen 58 und Stellgrößen 60 beschreibt. Die Dynamik 56 kann vereinfacht als Integrator 1 = u mit den Zuständen *x* = *q* und den Stellgrößen *q̇* oder als Doppelintegrator *q̈* = *u* mit den Zuständen *x*[*q^{T}*,*q̈^{T}*]und den Stellgrößen *u* = *q* angenommen werden.

Wenn die berechnete Trajektorie direkt ausgeführt werden soll, ist bevorzugt der Doppelintegrator zu verwenden, da hier die minimale und maximale Beschleunigung berücksichtigt werden kann.

Ein Kostenfunktional 62 gewichtet die Zustände 58 und Stellgrößen 60. Aufgabe der Optimierung ist es, aus den in der Regel unendlich vielen Steuerfunktionen die optimale Steuerfunktion herauszufinden, die das Kostenfunktional 62 minimiert. Dabei können die Zustände 58 Zustandsbeschränkungen 64 und die Stellgrößen 60 Stellgrö-ßenbeschränkungen 66 unterliegen.

Zur Kopplung des lokalen Planers 36 an den globalen Planer 34 gewichtet das Kostenfunktional 62 zusätzlich eine Abweichung des Manipulators 14 vom Sollpfad sowie eine Abweichung eines aktuellen Pfadparameters s, d.h. der aktuellen Position und/oder des aktuellen Zustands, von einem durch den Sollpfad vorgegebenen Zielparameter s_{G}.

Die Abweichung zwischen dem aktuellen Pfadparameter s und dem Zielparameter s_{G} wird bevorzugt nicht quadratisch gewichtet, da die Dimension des Gradienten von der Entfernung zum Ziel abhängig ist. Stattdessen verwendet das Kostenfunktional 62 den absoluten Wert und wechselt auf die quadratische Gewichtung, wenn der absolute Wert kleiner als ein definierter Grenzwert Δs ist. Auf diese Weise können Schwingungen in der Nähe des Ziels vermieden werden.

Ferner kann das dynamische Optimierungsproblem 54 eine Pfaddynamik 68 sowie Pfadeingangsbeschränkungen 70 umfassen. Die Pfaddynamik 68 basiert auf dem Sollpfad des globalen Planers 34. Bildlich gesprochen folgt der lokale Planer wie an einer Feder hängend dem global geplanten Pfad.

Das dynamische Optimierungsproblem 54 kann darüber hinaus zumindest eine Ungleichungsbeschränkung 72 umfassen, über welche Hindernisse berücksichtigt werden können. Die Ungleichungsbeschränkungen 72 berücksichtigen hierbei einen Abstand zu Selbstkollisionen und/oder einen Abstand zu Kollisionen mit Hindernissen 30, 32.

Zur Berechnung des Abstands für Selbstkollision kann eine Approximation des Roboters durch Kugeln mit Mittelpunkt und Radius herangezogen werden. Zur Berechnung des Abstands für Kollision mit Hindernissen kann eine Approximation der Umgebung durch eine Rasterkarte erfolgen, wobei sich die benötigten Distanzen durch die Euklidsche Distanztransformation der Rasterkarte ergeben. Berücksichtigt wird der jeweils kleinste Abstand entweder zur Selbstkollision und/oder zur Kollision mit einem Hindernis. Die Rasterung von Hindernissen und die Euklidsche Distanztransformation werden vorzugsweise im Voraus berechnet (Modellierer 38), so dass die Echtzeitfähigkeit der Optimierung nicht beeinträchtigt wird.

Um schnell bewegten Hindernissen Rechnung zu tragen, kann eine Abschätzung der Bewegung von Hindernissen und eine kurze Vorhersage im Planer implementiert sein. Da sowohl dynamische Roadmaps als auch optimierungsbasierte Planer auf einer gerasterten Darstellung des Arbeitsbereichs W basieren, gibt es keine Information darüber, wann sich ein Objekt an einer bestimmten Position befindet. Allerdings können zusätzliche Voxel entlang der Bewegungsrichtung eines Hindernisses blockiert werden und/oder eine Repräsentation eines Hindernisses künstlich vergrößert werden, wodurch der Planer vorzeitig auf Hindernisse reagieren kann. Hierdurch kann die Robustheit des Verfahrens erhöht werden.

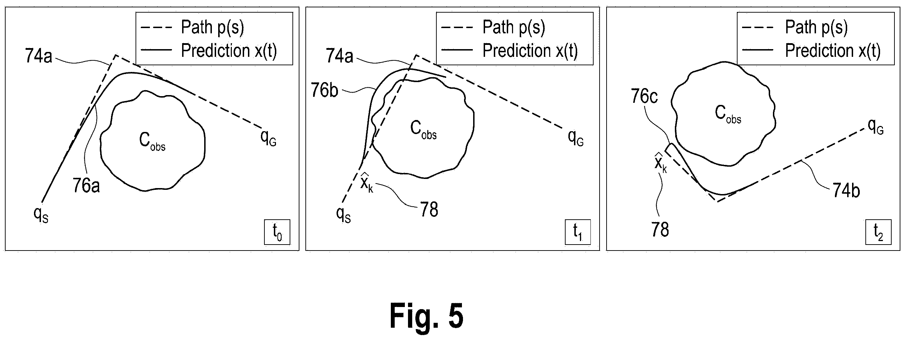

Fig. 5 illustriert abschließend in einer schematischen Darstellung eine mögliche Bewegung bei einer Bahnplanung mit einem kombinierten globalen und lokalen Planer.

Fig. 5 zeigt einen zweidimensionalen Konfigurationsraum C mit einem Hindernis, welches eine ungültige Region C_{obs} definiert. Der global geplante Sollpfad p(s) 74 wird als Führung für den lokalen optimierungsbasierten Planer verwendet, der die tatsächliche Bewegung in Form des Pfades x(t) 76 bestimmt.

In der Fig. 5 sind in nebeneinander gezeigten Darstellungen von links nach rechts drei aufeinanderfolgende Zeitpunkte illustriert.

In der ersten Darstellung erzeugt der lokale Planer 36 einen Pfad 76a, der vom Sollpfad 74a abweicht, um schneller vorgehen zu können. In der zweiten Darstellung, nachdem sich das Hindernis bewegt hat, erzeugt der lokale Planer 36 den Pfad 76b, um einer Kollision mit dem Hindernis auszuweichen. Sobald ein neuer globaler Pfad 74b berechnet wird, passt der lokale Planer 36 automatisch die Bewegung an dem neuen Sollpfad 74b an, wie in der letzten Darstellung gezeigt ist. Der globale Planer 34 kann dabei, wie hier dargestellt, ein Zwischenergebnis in Form einer vorhergesagten Position 78 vom lokalen Planer 36 erfragen und bei der Bestimmung des neuen Sollpfads 74b des Manipulators 14 berücksichtigen.

Es versteht sich, dass die hier dargestellten Implementierungen nur ein Beispiel für das erfindungsgemäße Verfahren und die erfindungsgemäße Vorrichtung sind. Andere Ausgestaltungen können ebenfalls von dem erfindungsgemäßen Gegenstand erfasst sein. Grundsätzlich ist der Schutzbereich der vorliegenden Anmeldung durch die Ansprüche gegeben und nicht durch die Beschreibung oder den in Figuren gezeigten Merkmalen beschränkt.

## Patentansprüche

1. Verfahren zur kollisionsfreien Bewegungsplanung eines ersten Manipulators (14) eines Roboters (12) von einem Startpunkt (26) zu einem Zielpunkt (28), mit den Schritten:
- Bestimmen eines Sollpfads des ersten Manipulators (14) zu einem Zielpunkt (28) mit einem globalen Planer (34);
- kontinuierliches Bestimmen einer Bewegung des ersten Manipulators (14) mit einem lokalen Planer (36) basierend auf dem Sollpfad des globalen Planers;
- Ausführen der Bewegung durch den ersten Manipulator (14) parallel zur Bestimmung durch den globalen und lokalen Planer (34, 36),
**dadurch gekennzeichnet, dass**
der globale Planer mindestens einmal eine Neuplanung vornimmt und der lokale Planer basierend auf dem neugeplanten Sollpfad die Bewegung des ersten Manipulators (14) bestimmt.

2. Verfahren nach Anspruch 1, wobei der globale Planer (34) kontinuierlich einen aktuellen Sollpfad bestimmt.

3. Verfahren nach einem der Ansprüche 1 oder 2, wobei der globale Planer (34) ein deterministischer Planer ist, insbesondere basierend auf einer dynamischen Roadmap (DRM).

4. Verfahren nach einem der Ansprüche 1 bis 3, wobei der globale Planer (34) bei einer Neuplanung ein Ergebnis des lokalen Planers (36) erfragt und bei der Bestimmung des Sollpfads berücksichtigt.

5. Verfahren nach einem der Ansprüche 1 bis 4, wobei der lokale Planer (36) auf modellprädiktiver Regelung (MPC) basiert und das Bestimmen der Bewegung optimierungsbasiert durch Lösen eines dynamischen Optimierungsproblems (54) erfolgt.

6. Verfahren nach Anspruch 5, wobei das dynamische Optimierungsproblem (54) ein Kostenfunktional (62) aufweist, welches eine Abweichung des Manipulators (14) vom Sollpfad sowie eine Abweichung eines aktuellen Pfadparameters von einem durch den Sollpfad vorgegebenen Zielparameter gewichtet.

7. Verfahren nach Anspruch 6, wobei das dynamische Optimierungsproblem (54) ferner eine Pfaddynamik (68) sowie Pfadeingangsbeschränkungen (70) umfasst und die Pfaddynamik (68) insbesondere auf dem Sollpfad des globalen Planers (34) basiert.

8. Verfahren nach einem der Ansprüche 5 bis 7, wobei das dynamische Optimierungsproblem (54) ferner mindestens eine Ungleichungsbeschränkung (72) für einen Abstand zu Kollisionen umfasst.

9. Verfahren nach einem der Ansprüche 1 bis 8, wobei das Ausführen der Bestimmung durch den globalen Planer über eine definierte Bedingung einstellbar ist, insbesondere wobei über die definierte Bedingung eine unbedingte, keine oder eine bedingte Ausführung der Bestimmung durch den globalen Planer (34) einstellbar ist.

10. Verfahren nach einem der Ansprüche 1 bis 8, wobei eine bedingte Ausführung der Bestimmung durch den globalen Planer (34) einstellbar ist und die bedingte Ausführung davon abhängig ist, ob ein ermittelter Sollpfad und/oder eine ermittelte Bewegung in einem definierten Planungshorizont valide ist und davon, ob ein Abstand zwischen einem aktuellen Zustand und einem Zielzustand während eines letzten Bestimmungszyklus des lokalen Planers (36) verringert wurde.

11. Verfahren nach einem der Ansprüche 1 bis 10, wobei das Bewegen des ersten Manipulators (14) pausiert, wenn eine Planung durch den globalen Planer (34) fehlschlägt.

12. Verfahren nach einem der Ansprüche 1 bis 10, wobei das Bewegen des ersten Manipulators (14) ausschließlich basierend auf dem lokalen Planer (36) fortgesetzt wird, wenn eine Planung durch den globalen Planer (34) fehlschlägt.

13. Verfahren nach einem der Ansprüche 1 bis 12, wobei der globale und/oder der lokale Planer (34, 36) eine Bewegung eines Hindernisses teilweise prädiziert und/oder eine Repräsentation eines Hindernisses (30, 32) künstlich vergrößert.

14. Verfahren nach einem der Ansprüche 1 bis 13, wobei das Verfahren ferner eine weitere Bewegungsplanung für mindestens einen zweiten Manipulator des Roboters (12) umfasst und die weitere Bewegungsplanung parallel und koordiniert zu der kollisionsfreien Bewegungsplanung des ersten Manipulators (14) erfolgt.

15. Vorrichtung (10) aufweisend einen Roboter (12) mit mindestens einem Manipulator (14) und einer Steuereinheit (20), wobei die Steuereinheit (20) dazu ausgebildet ist, ein Verfahren gemäß einem der Ansprüche 1 bis 14 auszuführen.

## Claims

1. A method for collision-free motion planning of a first manipulator (14) of a robot (12) from a starting point (26) to a destination point (28), having the steps:
- determining a target path of said first manipulator (14) to the destination point (28) with a global planner (34);
- continuously determining a movement of the first manipulator (14) with a local planner (36) based on a current target path of the global planner;
- performing the movement by the first manipulator (14) in parallel with the determination by said global planner and said local planner (34, 36)
**characterized in that**
the global planner carries out replanning at least once and the local planner performs the movement of the first manipulator (14) based on the replanned target path.

2. The method according to claim 1, wherein the global planner (34) continuously determines the current target path.

3. The method according to one of claims 1 or 2, wherein the global planner (34) is a deterministic planner, in particular based on a dynamic roadmap (DRM).

4. The method according to any one of claims 1 to 3, wherein the global planner (34) inquires a result of the local planner (36) during re-planning and takes it into account when determining the target path.

5. The method according to any one of claims 1 to 4, wherein the local planner (36) is based on model predictive control (MPC) and the determination of the movement is based on optimization by solving a dynamic optimization problem (54).

6. The method according to claim 5, wherein the dynamic optimization problem (54) comprises a cost function (62) which weights a deviation of the manipulator (14) from the target path and a deviation of a current path parameter from a target parameter specified by the target path.

7. The method according to claim 6, wherein the dynamic optimization problem (54) further comprises path dynamics (68) and path input constraints (70), and the path dynamics (68) is based in particular on the target path of the global planner (34).

8. The method according to any one of claims 5 to 7, wherein the dynamic optimization problem (54) further comprises at least one inequality constraint (72) for a distance to collisions.

9. The method according to any one of claims 1 to 8, wherein the execution of the determination by the global planner is adjustable via a defined condition, in particular wherein an unconditional, no or conditional execution of the determination by the global planner (34) can be set via the defined condition.

10. The method according to claim 8, wherein the conditional execution depends on whether a determined target path and/or a determined movement is valid in a defined planning horizon and whether a distance between a current state and a target state has been reduced during a last determination cycle of the local planner (36).

11. The method according to any one of claims 1 to 10, wherein moving the first manipulator (14) pauses if planning by the global planner (34) fails.

12. The method according to any one of claims 1 to 10, wherein moving the first manipulator (14) is continued exclusively based on the local planner (36) if planning by the global planner (34) fails.

13. The method according to one of claims 1 to 12, wherein the global and/or local planner (34, 36) partially predicts a movement of an obstacle and/or artificially enlarges a representation of an obstacle (30, 32).

14. The method according to any one of claims 1 to 13, wherein the method further comprises additional motion planning for at least a second manipulator of the robot (12) and the additional motion planning is carried out in parallel and coordinated with the collision-free motion planning of the first manipulator (14).

15. An apparatus (10) comprising a robot (12) having at least one manipulator (14) and a control unit (20), the control unit (20) being adapted to perform the method according to any one of claims 1 to 14.

## Revendications

1. Procédé pour la planification de mouvement sans collision d'un premier élément manipulateur (14) d'un robot (12) d'un point de départ (26) à un point cible (28), comportant les étapes consistant à :
- déterminer un chemin de consigne du premier élément manipulateur (14) vers un point cible (28) avec un élément planificateur global (34) ;
- déterminer en continu un mouvement du premier élément manipulateur (14) avec un élément planificateur local (36) sur la base du chemin de consigne de l'élément planificateur global ;
- exécuter le mouvement avec le premier élément manipulateur (14) parallèlement à la détermination par les éléments planificateurs global et local (34, 36),
**caractérisé en ce que**
l'élément planificateur global effectue au moins une fois une nouvelle planification et l'élément planificateur local détermine le mouvement du premier élément manipulateur (14) sur la base du chemin de consigne nouvellement planifié.

2. Procédé selon la revendication 1, dans lequel l'élément planificateur global (34) détermine en continu un chemin de consigne actuel.

3. Procédé selon l'une des revendications 1 ou 2, dans lequel l'élément planificateur global (34) est un élément planificateur déterministe, en particulier basé sur une feuille de route dynamique (DRM).

4. Procédé selon l'une des revendications 1 à 3, dans lequel l'élément planificateur global (34) demande un résultat de l'élément planificateur local (36) lors d'une nouvelle planification et le prend en compte lors de la détermination du chemin de consigne.

5. Procédé selon l'une des revendications 1 à 4, dans lequel l'élément planificateur local (36) est basé sur une commande prédictive à base de modèle (MPC) et la détermination du mouvement est effectuée en se basant sur l'optimisation en résolvant un problème d'optimisation dynamique (54).

6. Procédé selon la revendication 5, dans lequel le problème d'optimisation dynamique (54) présente une fonction de coût (62) qui pondère un écart entre l'élément manipulateur (14) et le chemin de consigne ainsi qu'un écart entre un paramètre de chemin actuel et un paramètre cible prédéfini par le chemin de consigne.

7. Procédé selon la revendication 6, dans lequel le problème d'optimisation dynamique (54) comprend en outre une dynamique de chemin (68) ainsi que des contraintes d'entrée de chemin (70) et la dynamique de chemin (68) est basée en particulier sur le chemin de consigne de l'élément planificateur global (34).

8. Procédé selon l'une des revendications 5 à 7, dans lequel le problème d'optimisation dynamique (54) comprend en outre au moins une contrainte d'inégalité (72) pour une distance par rapport aux collisions.

9. Procédé selon l'une des revendications 1 à 8, dans lequel l'exécution de la détermination par l'élément planificateur global peut être réglée par l'intermédiaire d'une condition définie, en particulier dans lequel, par l'intermédiaire de la condition définie, une exécution inconditionnelle, aucune exécution ou une exécution conditionnelle de la détermination par l'élément planificateur global (34) peut être réglée.

10. Procédé selon l'une des revendications 1 à 8, dans lequel une exécution conditionnelle de la détermination par l'élément planificateur global (34) peut être réglée et l'exécution conditionnelle dépend du fait de savoir si un chemin de consigne spécifié et/ou un mouvement spécifié sont valides dans un horizon de planification défini et si un écart entre un état actuel et un état cible a été réduit pendant un dernier cycle de détermination de l'élément planificateur local (36).

11. Procédé selon l'une des revendications 1 à 10, dans lequel le mouvement du premier élément manipulateur (14) est arrêté lorsqu'une planification par l'élément planificateur global (34) échoue.

12. Procédé selon l'une des revendications 1 à 10, dans lequel le mouvement du premier élément manipulateur (14) se poursuit uniquement sur la base de l'élément planificateur local (36) lorsqu'une planification par l'élément planificateur global (34) échoue.

13. Procédé selon l'une des revendications 1 à 12, dans lequel l'élément planificateur global et/ou l'élément planificateur local (34, 36) prédisent partiellement un mouvement d'un obstacle et/ou augmentent artificiellement une représentation d'un obstacle (30, 32).

14. Procédé selon l'une des revendications 1 à 13, dans lequel le procédé comprend en outre une planification de mouvement supplémentaire pour au moins un second élément manipulateur du robot (12) et la planification de mouvement supplémentaire est effectuée parallèlement et de manière coordonnée par rapport à la planification de mouvement sans collision du premier élément manipulateur (14).

15. Dispositif (10) présentant un robot (12) comportant au moins un élément manipulateur (14) et une unité de commande (20), dans lequel l'unité de commande (20) est configurée pour exécuter un procédé conformément à l'une des revendications 1 à 14.
